Europäisches Patentamt

European Patent Office

Office européen des brevets

(11) Publication number: **0 262 692 B1**

# EUROPEAN PATENT SPECIFICATION

(45) Date of publication of patent specification: **22.07.92**   (51) Int. Cl.⁵: **G03B 27/62**, G03G 15/00

(21) Application number: **87115897.8**

(22) Date of filing: **12.04.84**

(60) Publication number of the earlier application in accordance with Art.76 EPC: **0 125 497**

(54) **Electrostatic copying apparatus.**

(30) Priority: **12.04.83 JP 63051/83**

(43) Date of publication of application:
**06.04.88 Bulletin 88/14**

(45) Publication of the grant of the patent:
**22.07.92 Bulletin 92/30**

(84) Designated Contracting States:
**DE FR GB NL**

(56) References cited:
**US-A- 4 108 544**

**XEROX DISCLOSURE JOURNAL, vol. 7, no. 2, March-April 1982, pages 99-101, Stamford, Connecticut, US; M. SILVERBERG: "Digital control system for copier scan servo"**

**PATENT ABSTRACTS OF JAPAN, vol. 6, no. 116 (P-125)[994], 29th June 1982; & JP-A-57 44 165**

**PATENT ABSTRACTS OF JAPAN, vol.1, no. 8, page 240/E/6, 16th March 1977; & JP-A-51 137 419**

(73) Proprietor: **MITA INDUSTRIAL CO. LTD.**

**2-28, 1-chome, Tamatsukuri Higashi-ku Osaka 540(JP)**

(72) Inventor: **Iida, Kazumi**
**3-3-1 Miyakenaka**
**Matsubara-shi Osaka-fu(JP)**
Inventor: **Ohata, Yosuke**
**1-10-4 Nishiura**
**Habikino-shi Osaka-fu(JP)**
Inventor: **Hyodo, Keiichiro**
**3-19-3-201 Nishi Okamoto Higashi Nada-ku Kobe-shi Hyogo-ken(JP)**
Inventor: **Akiyama, Kazunori**
**6-1-1 Tonda-cho**
**Takatsuki-shi Osaka-fu(JP)**
Inventor: **Umeda, Tadashi**
**307 Jinraku**
**Yamato Takada-shi Nara-ken(JP)**
Inventor: **Kishimoto, Keiichi**
**1498-1 Oaza Abe, Koryo-cho Kita Katsuragi-gun Nara-ken(JP)**

(74) Representative: **Patentanwälte Beetz sen. - Beetz jun. Timpe - Siegfried - Schmitt-Fumian**
**Steinsdorfstrasse 10**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

This invention relates to an electrostatic copying apparatus as mentioned in the preamble portion of claim 1.

Such an electrostatic copying apparatus is known from US-A-4 108 544.

Electrostatic copying apparatuses of the so-called shell type including a lower supporting frame and an upper supporting frame mounted for free pivotal movement between an open position and a closed position have been proposed and come into practical application. Generally, in such a shell-type electrostatic copying apparatus, when the upper supporting frame is held at the open position, at least a considerable portion of a conveying passage for a sheet material such as a copying paper is opened. Hence, if jamming of the sheet material should occur in the conveying passage, it can be easily taken out. However, the conventional shell-type electrostatic copying apparatuses have certain problems to be solved.

As regards the control means for controlling the document placing means in the required manner, especially the one which is equipped with a microprocessor, the cost of production could still be reduced by decreasing the number of required elements of the microprocessor.

The known electrophotographic copying apparatus includes a feedforward clutch and a reverse clutch which are selectively operated by a cam mechanism associated with a control clutch and by latch mechanisms associated with the control clutch and controlled by one solenoid.

Xerox Disclosure Journal, Vol. 7, No. 2, March/April 1982, pages 99-101, Stamford, Connecticut, USA; M. Silverberg; "Digital control system for copier scan servo" describes to use an apertured timing disc which is attached to and rotatable with the copier photoreceptor to generate clock signals upon rotation of the timing disc. The clock signals are frequency multiplied up to the signal frequency, i. e. to 100 kHz. A set of counters are used to compare the measured time between successive clock pulses with the desired time for a given point in the desired scan acceleration or deceleration profile.

Another set of counters are provided to compare the desired movement of the scan servo versus movement of the copier photoreceptor. This, however, merely describes the use of the detection of rotation of the timing disc in synchronizing the movement of the copier photoreceptor with the movement of the scan in a predetermined manner.

The Xerox Disclosure Journal does not describe to detect the relative movement between the rotation of a timing disc and the movement of a document placing means and to control respective clutch mechanisms for reverse and forward movement of the document placing means according to the amount of rotation of the timing disc.

An object of this invention is to provide an electrostatic copying apparatus in which the number of required elements of a control means for controlling the movement of a document placing means in the required manner, and therefore the cost of production, can be reduced.

The object is solved by the features of the main claim, further advantageous developments of the invention are described in the dependent claims.

Other objects and advantages of this invention will become apparent from the following description of embodiments of the invention.

Figure 1 is a simplified longitudinal sectional view showing one embodiment of the electrostatic copying apparatus constructed in accordance with this invention;

Figure 2 is a simplified cross sectional view of the electrostatic copying apparatus of Figure 1;

Figure 3 is a simplified view showing a driving system of the electrostatic copying apparatus of Figure 1;

Figure 4 is a simplified view showing a part of the driving system of Figure 3;

Figure 5 is a simplified side elevation of a detecting switch provided in relation to a document placing means;

Figure 6 is a simplified top plan view of the detecting switch showing in Figure 5;

Figures 7 and 8 are a partial sectional view and a partial side elevation of constituent elements relating to means for detecting the amount of driving;

Figure 9 is a block diagram showing elements relating to the controlling of the action of the electrostatic copying apparatus of Figure 1; and

Figures 10-A and 10-B are flow charts showing the mode of controlling the action of the electrostatic copying apparatus of Figure 1.

## DETAILED DESCRIPTION OF PREFERRED EMBODIMENTS

Outline of the copying apparatus as a whole

The entire structure of one embodiment of the electrostatic copying apparatus which has been improved in various respects in accordance with this invention will first be described.

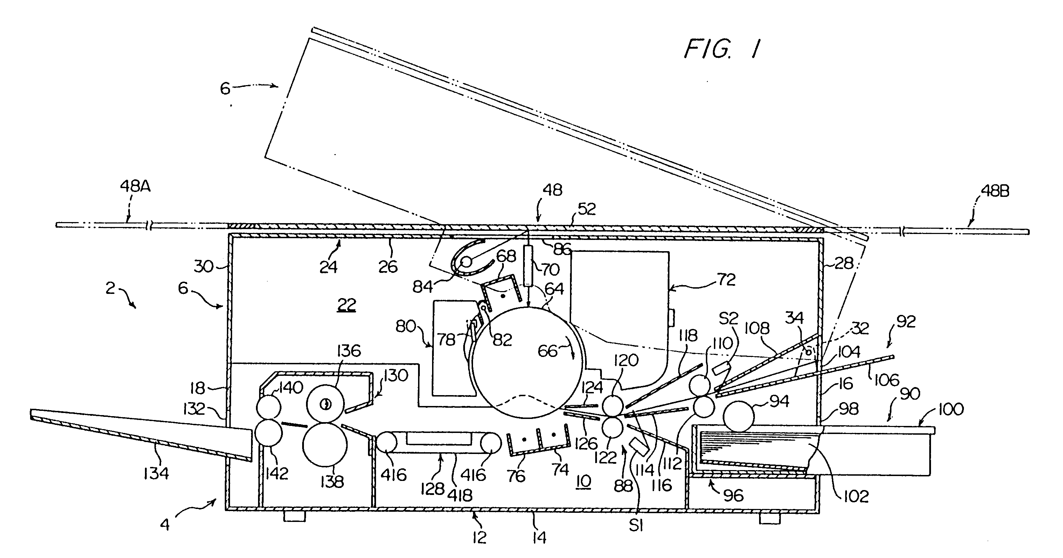

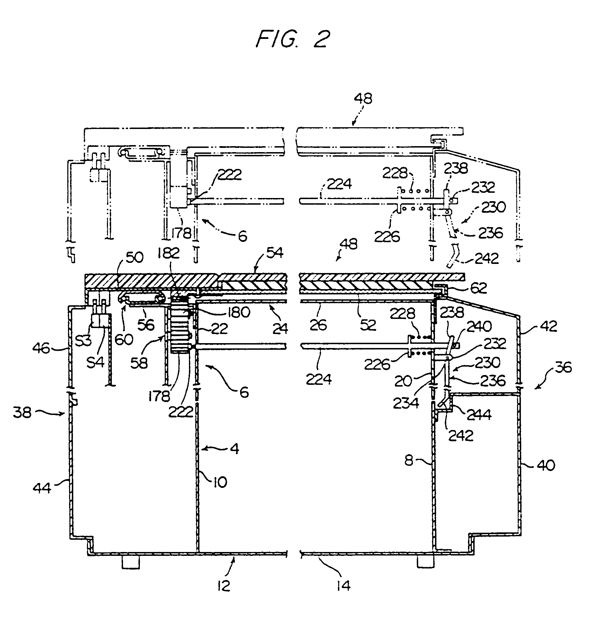

With reference to Figure 1, the illustrated copying apparatus has a nearly rectangular parallelpipedal housing shown generally at 2. The housing 2 is defined by a lower supporting frame 4 and an upper supporting frame 6. With reference to Figure 2 together with Figure 1, the lower supporting frame includes a vertical front base plate 8 and a vertical rear base plate 10 disposed with a predetermined distance therebetween in the front-rear direction (a direction perpendicular to the sheet surface in Figure 1, and the left-right direction in Figure 2), and a bottom plate 12 fixed to the lower ends of these plates. The bottom plate 12 has a bottom wall portion 14 defining the bottom surface of the housing 2 and lower surface wall portions 16 and 18 defining the nearly lower half portions of the two side surfaces of the housing 2. On the other hand, the upper supporting frame 6 includes a vertical front base plate 20 and a vertical rear base plate 22 disposed with a predetermined distance therebetween in the front-rear direction and a top plate 24 fixed to the upper ends of these plates. The top plate 24 has a top wall portion 26 defining the top surface of the housing 2 and upper surface wall portions 28 and 30 defining the nearly upper half portions of the two side surfaces of the housing 2. The upper supporting frame 6 is mounted on the lower supporting frame 4 so that it can pivot freely between a closed position shown by solid lines in Figures 1 and 2 and an open position shown by two-dot chain lines in Figures 1 and 2. More specifically, upwardly extending supporting projections 32 are provided at the right end portions of the vertical front base plate 8 and the vertical rear base plate 10 of the lower supporting frame 4, and the vertical front base plate 20 and the vertical rear base plate 22 of the upper supporting frame 6 are pivotally mounted on these supporting projections 32 through a shaft 34. Normally, the upper supporting frame 6 is locked in the closed position shown by the solid lines in Figures 1 and 2 by a suitable locking mechanism (not shown), but as required, can be pivoted to the open position shown by the two-dot chain lines in Figures 1 and 2 with the shaft 34 as a center by cancelling the locking action of the locking mechanism.

In the illustrated copying apparatus, there are also provided a front cover 36 covering the front surface of the housing 2 and a rear cover 38 for covering the rear surface of the housing 2, as shown in Figure 2. The front cover 36 is comprised of a lower front cover 40 fixed to the lower supporting frame 4 and an upper front cover 42 fixed to the upper supporting frame 6. Likewise, the rear cover 38 is comprised of a lower rear cover 44 fixed to the lower supporting frame 4 and an upper rear cover 46 fixed to the upper supporting frame 6. Accordingly, when the upper supporting frame 6 is moved from the closed position to the open position, approximately the upper half portions of the front cover 36 and the rear cover 38, i.e. the upper front cover 42 and the upper rear cover 46, can be moved to the open position in the same way.

A document placing means shown generally at 48 is disposed on the top surface of the housing 2 so that it can reciprocate freely in the left-right direction in Figure 1 or a direction perpendicular to the sheet surface in Figure 2. As clearly shown in Figure 2, the document placing means 48 which may be in a form known per se includes a supporting base plate 50, a transparent plate 52 fixed to the supporting base plate 50, and a document cover 54 (omitted in Figure 1) whose rear edge (left edge in Figure 2) is pivotally mounted on the supporting base plate 50 by a suitably mechanism (not shown). With reference to Figure 2, the method of mounting the document placing means 48 will be described. A supporting member 58 having a horizontal portion 56 is fixed to the rear surface of the vertical rear base plate 22 of the upper supporting frame 6, and between the horizontal portion 56 of the supporting member 58 and the supporting base plate 50 of the document placing means 48 is interposed a sliding mechanism 60 (which may conveniently be one commercially available under the tradename "Aculide") extending in the reciprocating direction of the document placing means 48. On the other hand, a guide member 62 having a rearwardly opened guide groove at its upper portion extending upwardly beyond the top surface of the housing 2 is fixed to the front surface of the vertical front base plate 20 of the upper supporting frame 6. The front edge portion of the transparent plate 52 of the document placing means 48 is slidably received in the guide groove of the guide member 62. Thus, the document placing means 48 is mounted such that it can freely reciprocate between a start-of-scan position shown by a two-dot chain line 48A in Figure 1 and a scan movement limit position shown by a two-dot chain line 48B in Figure 1.

With reference to Figure 1, a rotating drum 64 having a photosensitive member on its peripheral surface is rotatably mounted nearly centrally within the housing 2. Around the rotating drum 64 adapted to be rotated in the direction of an arrow 66 are disposed a charging corona discharge device 68, an optical unit 70, a latent electrostatic image developing device 72, a transferring corona discharge device 74, a peeling corona discharge device 76, a cleaning device 80 having a cleaning blade 78 and a charge eleminating lamp 82 in this sequence in the rotating direction of the drum 64. In relation to the optical unit 70, a document illuminating lamp 84 is also provided. The document illuminating lamp 84 illuminates a document (not shown) to be copied, placed on the transparent plate 52 of the document placing means 48, through an opening 86 formed at the top wall portion 26 of the top plate 24. The optical unit 70 is constructed by arranging many elongate optical elements extending in the vertical direction (for example, rod-like lenses sold under the tradename "Selfox Microlense" by Nippon Sheet Glass Co., Ltd.), and as shown by an arrow in Figure 1, projects the reflected light from the document onto the peripheral surface of the rotating drum 64.

A sheet material conveying device shown generally at 88 is disposed in the nearly lower half portion of the housing 2. At one end (the right end in Figure 1) of the sheet material conveying device 88 are provided a cassette-type copying paper feed device 90 and a manual sheet feed device 92. The copying paper feed device 90 consists of a combination of a paper cassette receiving section 96 having a feed roller 94 provided therein and a paper cassette 100 to be loaded in the paper cassette receiving section 96 through an opening 98 formed on the right side surface of the housing 2 (more specifically the right side lower surface wall portion 16 of the bottom plate 12), and feeds copying paper sheets one by one from a copying sheet layer 102 accommodated in the cassette 100 by the action of the feed roller 94. The manual feed device 92 includes a guide plate 106 protruding outwardly through an opening 104 formed in the right side surface of the housing 2, a guide plate 108 located above the guide plate 106, and a pair of feed rollers 110 and 112 located downstream of (on the left in Figure 1) the guide plates 106 and 108. When a suitable sheet material such as a sheet-like copying paper is positioned on the guide plate 106 and advanced to the nipping position of the feed rollers 110 and 112, these feed rollers 110 and 112 nips the sheet material and feeds it. The copying paper fed from the copying paper feed device 90 between the guide plates 114 and 116 or the sheet material fed from the manual feed device 92 between the guide plates 114 and 118 is passed between guide plates 124 and 126 by the action of a pair of conveying rollers 120 and 122 and conveyed to a position between the rotating drum 64 and the transferring corona discharge device 74 and the peeling corona discharge device 76. Then, by the action of a suitable conveying belt mechanism 128, it is sent to a fixing device 130. Thereafter, it is discharged into a receiving tray 134 through an opening 132 formed in the left side surface of the housing 2 (more specifically, the left side lower surface wall portion 18 of the bottom plate 12). The fixing device 130 includes a fixing roll pair comprised of an upper roller 136 and a lower roller 138 cooperating with each other (the structure of the fixing device 130 will be described in detail hereinafter). The sheet material from the fixing roller is discharged into the receiving tray 134 by the action of a pair of discharge rollers 140 and 142.

Thus, it will be easily understood with reference to Figure 1 that the guide plate 108, the feed roller 110, the guide plate 118, the conveying roller 120 and the guide plate 124 in the sheet material conveying device 88 are mounted on the upper supporting member 6 together with the rotating drum 64, the charging corona discharge device 68, the optical unit 70, the developing device 72, the cleaning means 80, the charge eliminating lamp 82 and the document illuminating lamp 84. On the other hand, the copying paper feed device 90, the guide plate 106, the feed roller 112, the guide plate 114, the guide plate 116, the conveying roller 122, the guide plate 126, the transferring corona discharge device 74, the peeling corona discharge device 76, the conveying belt mechanism 128, the fixing device 130 and the receiving tray 134 are mounted on the lower supporting frame 4. Accordingly, when the upper supporting frame 6 is moved from the closed position shown by the solid line to the open position shown by the two-dot chain line, most of the conveying passage for the sheet material is opened, and therefore in the event of jamming, the sheet material can be easily taken out from it.

In the copying apparatus described above, the charging corona discharge device 68 charges the photosensitive member to a specified polarity substantially uniformly while the rotating drum is rotated in the direction of arrow 66. Then, the image of the document is projected onto the photosensitive member through the optical unit 70 (at this time, the document placing means 48 makes a scanning exposure movement to the right in Figure 1 from the start-of-scan position shown by the two-dot chain line 48A in Figure 1) to form on the photosensitive member a latent electrostatic image corresponding to the document. Thereafter, the developing device 72 applies toner particles to the latent electrostatic image on the photosensitive member to develop it to a toner image. Subsequently, a sheet material such as copying paper fed from the copying paper feed device 90 or the manual sheet feed device 92 is brought into contact with the photosensitive member, and by the action of the transferring corona discharge device 74, the toner image on the photosensitve member is transferred to the sheet material. The sheet material is then peeled off from the photosensitive member by the action of the peeling corona discharge device 76. The sheet material having the toner image transferred thereto is then conveyed to the fixing device 130 where the toner image is fixed. The sheet material having the fixed toner image is then discharged into the receiving tray 134. In the meantime, the rotating drum 64 continues to rotate. The residual toner particles are removed from the photosensitive member by the action of the cleaning device 80, and the residual charge on the photosensitive member is erased by the action of the charge eliminating lamp 82.

Driving system

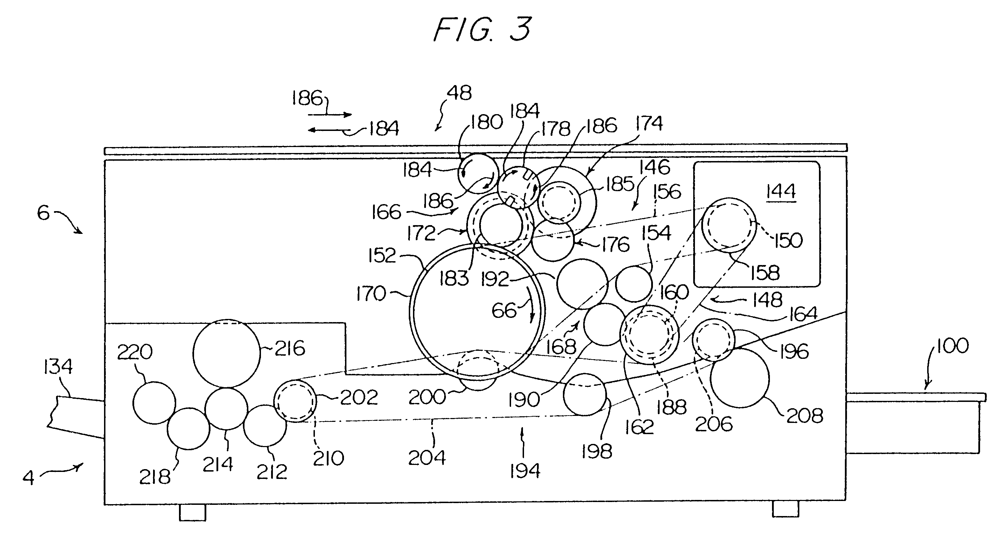

With reference to Figure 3 in conjunction with Figure 1, the driving system in the illustrated copying apparatus will be described in summary.

In the illustrated copying apparatus, a driving source 144 which may be an electric motor is provided in the upper supporting frame 6. In relation to the driving source 144, a power transmission mechanism 146 for the rotating drum and an interlocking power transmission mechanism 148 are provided in the upper supporting frame 6. The power transmission mechanism 146 for the rotating drum includes a toothed pulley 150 fixed to the output shaft of the driving source 144, a toothed pulley 152 linked to the rotating drum 64, a rotatably mounted tensioning toothed pulley 154, and a timing belt 156 wrapped about these toothed pulleys 150, 152 and 154. The interlocking power transmission mechanism 148 includes a sprocket wheel 158 fixed to the output shaft of the driving source 144, a rotatably mounted sprocket wheel 160, a sprocket wheel 162 mounted coaxially, and rotatably as a unit, with the sprocket wheel 160, and a chain 164 wrapped about the sprocket wheels 158 and 160.

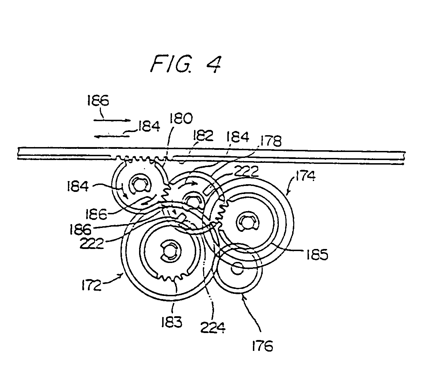

The upper supporting frame 6 further has provided therein a power transmission mechanism 166 for the document placing means and a power transmission mechanism 168 for the developing device. The power transmission mechanism 166 for the document placing means includes a gear 170 mounted coaxially with, and rotatably as a unit with, the toothed pulley 152 in the power transmission mechanism 146 for the rotating drum, a double clutch means 176 comprising a clutch means 172 for normal motion and a clutch means 174 for reverse motion, a gear 178, a pinion gear 180, and a rack 182 (Figures 2 and 4) fixed to the lower surface of the supporting base plate 50 of the document placing means 48. With reference to Figures 3 and 4 in conjunction with Figure 1, the clutch means 172 for normal motion has an input gear 183 in mesh with the gear 170, and the clutch means 174 for reverse motion has an output gear 185 in mesh with the gear 178. The double clutch means 176 comprised of the clutch means 172 and 174 may be substantially the same as the double electromagnetically controlled spring clutch mechanism disclosed in the specification and drawings of co-pending Japanese Patent Application No. 47120/1983 entitled "Electromagnetically Controlled Spring Clutch Mechanism" filed March 23, 1983. Accordingly, the specification and drawings of the above application are cited as reference instead of giving a detailed description of the structure of the double clutch means 176.

The gear 178 is engaged with the pinion gear 180, and the pinion gear 180 is engaged with the rack 182 extending in the reciprocating direction (the left-right direction in Figures 1, 3 and 4) of the document placing means 48. When the driving source 144 is energized and the gear 170 is rotating in the direction of arrow 66, actuation of the clutch means 172 for normal motion causes the gear 178 and the pinion gear 180 to rotate in the direction shown by an arrow 184, and consequently the document placing means 48 is moved at a predetermined speed V in the direction of arrow 184. On the other hand, when the clutch means 174 for reverse motion is actuated at this time, the gear 178 and the pinion gear 180 are rotated in the direction of an arrow 186, and consequently, the document placing means 48 is moved at a speed double the speed V, i.e. 2V, in the direction of arrow 186.

The power transmission mechanism 168 for the developing device 168 includes a gear 188 rotated coaxially with, and rotatably as a unit with, the sprocket wheels 160 and 162 in the interlocking power transmission mechanism 148, a gear 190 engaged with the gear 188 and a gear 192 engaged with the gear 190. The gear 190 is connected to a sleeve member (to be described hereinafter) provided in the developing device 72.

A power transmission mechanism 194 which has to do with the conveying of a sheet material is mounted on the lower supporting frame 4. The power transmission mechanism 194 includes sprocket wheels 196, 198, 200 and 202 and a chain 204 wrapped about these sprocket wheels 196, 198, 200 and 202. The sprocket wheel 196 is connected to the feed roller 112 (Figure 1). The sprocket wheel 196 also has provided therein a gear 206 coaxially, and rotatably as a unit, with the sprocket wheel 196. A gear 208 is engaged with the gear 206, and the gear 208 is connected to the feed roller 94 (Figure 1) in the paper feed device 90 through a suitable clutch means (not shown) electromagnetically controlled. The sprocket wheel 198 is connected to the conveying roller 122 through a suitable electromagnetically controlled clutch means (not shown). The sprocket wheel 200 is provided so as to keep the chain 204 taut. The sprocket wheel 202 is connected to a driven roller 416 (Figure 1) in the conveying belt mechanism 128. The sprocket wheel 202 has attached thereto a gear 210 coaxial, and rotatably as a unit, with it. A gear 212 is in mesh with the gear 210, and a gear 214 is in mesh with the gear 212. A gear 216 and a gear 218 are kept in mesh with the gear 214, and a gear 220, with the gear 218. The gear 216 is linked to the upper roller 136 (Figure 1) of the fixing device 130, and the gear 220, to a discharge roller 142.

It will be readily understood from Figures 1 and 3 that when the upper supporting frame 6 is held at the closed position, the sprocket wheel 162 of the interlocking power transmission mechanism 148 provided in the upper supporting frame 6 is engaged with the chain 204 of the power transmission mechanism 194 provided in the lower supporting frame 4 and consequently, the driving source 144 is drivingly connected to the power transmission mechanism 194 through the interlocking power transmission mechanism 148. On the other hand, when the upper supporting frame 6 is moved to the open position shown by the two-dot chain line in Figure 1, the sprocket wheel 162 of the interlocking power transmission mechanism 148 is brought out of engagement with the chain 204 of the power transmission mechanism 194.

Actuation control

Controlling of the actuation of the copying apparatus described above will be described in summary.

With reference to Figure 1, sheet material detecting switches S1 and S2 are disposed in the sheet material conveying passage. The detecting switch S1 has a detecting arm which slightly upstream of the pair of conveyor rollers 120 and 122, crosses the sheet material conveying passage between the guide plates 114 and 116 and also the sheet material conveying passage between the guide plates 114 and 118. It detects a sheet material fed from the paper feeding device 90 and passing between the guide plates 114 and 116 and also a sheet material fed from the manual feeding device 92 and passing between the guide plates 114 and 118. The detecting switch S2 has an arm which slightly upstream of the pair of feed rollers 110 and 112, crosses a conveying passage for a sheet material inserted between the guide plates 106 and 108, and detects a sheet material positioned on the guide plate 106 and advanced by hand.

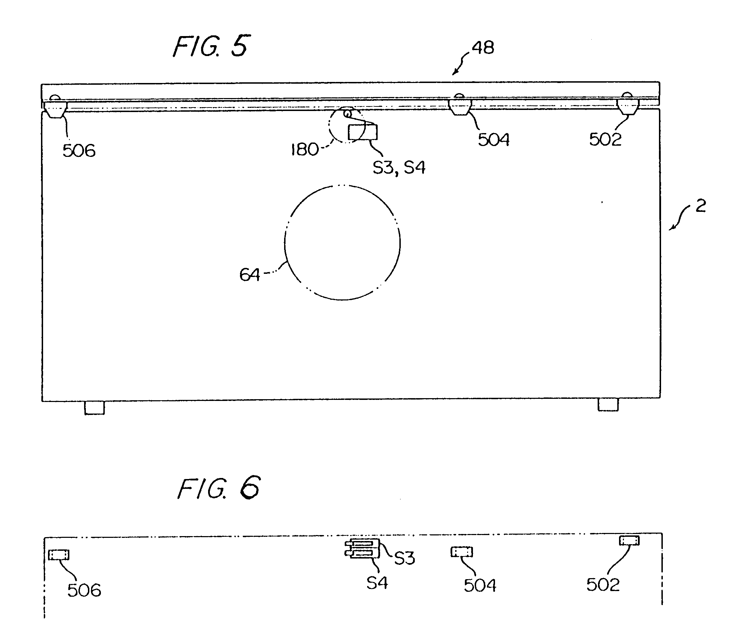

With reference to Figures 5 and 6 taken in conjunction with Figure 2, document placing mean detecting switches S3 and S4 are disposed below the supporting base plate 50 of the document placing means 48. Actuation pieces 502, 504 and 506 are fixed to the lower surface of the supporting base plate 50. When the document placing means 48 is held at the start-of-scan position shown by the two-dot chain line 48A in Figure 1, the actuation piece 502 acts on the detecting switch S3 to close it. When the document placing means 48 is moved for scanning exposure by a predetermined distance to the right in Figures 1, 5 and 6 , the actuating piece 504 acts on the detecting switch S4 to close it. When the document placing means 48 continues to make a scanning exposure movement and is held at the scan exposure movement limit position shown by the two-dot chain line 48B in Figure 1, the actuating piece 506 acts on the detecting switch S4 to close it (thus, the document placing means 48 is surely prevented from moving to the right in Figure 1 beyond the scanning exposure movement limit position shown by the two-dot chain line 48B in Figure 1).

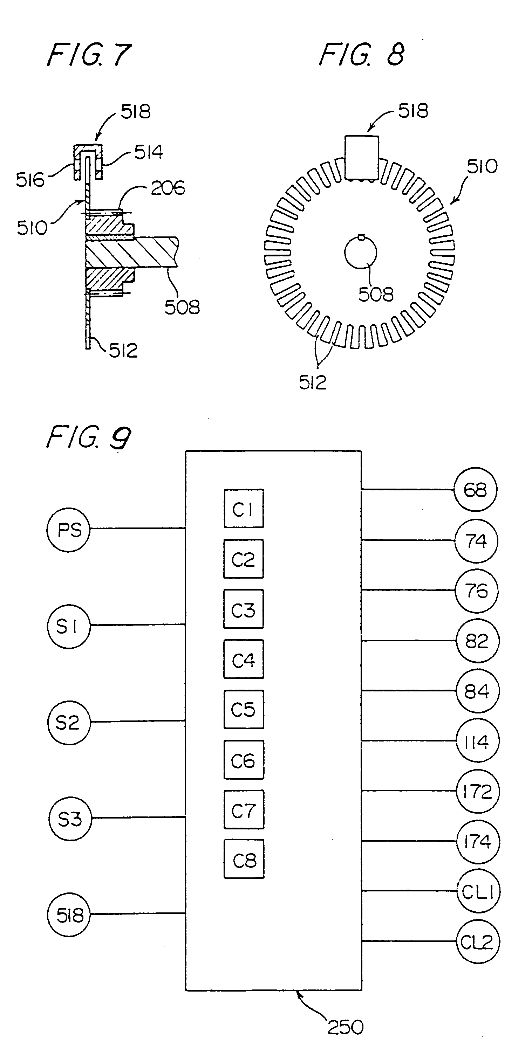

Furthermore, in the illustrated embodiment, there is provided a driving amount detecting means for detecting the amount of a rotating element which is always rotated when the driving source 144 (Figure 3) is energized. With reference to Figures 7 and 8 , a detection plate 510 and the gear 206 already referred to with reference to Figure 3 are fixed to a shaft 508 to which the feed roller 112 (Figure 1) is secured. A plurality of circumferentially spaced cuts 512 are formed in the peripheral edge portion of the detection plate 510. The driving amount detecting means is comprised of an optical detector 518 having a light emitting element 514 located on one side of the peripheral edge portion of the detection plate 510 and a light receiving element 516 located on the other side. The detector 518 generates a pulse signal every time the cut 512 is positioned between the light emitting element 514 and the light receiving element 516 during the rotation of the detection plate 510, and thereby the light receiving element 516 receives the light from the light emitting element 514 or the detection plate 510 shuts off the light from the light emitting element.

With reference to Figure 9 , the detecting signals produced by the various detecting switches and detectors described above are fed into the control means 250 which may be a microprocessor, and the control means 250 controls the actuations of the various means of the copying apparatus according to the signals fed thereinto.

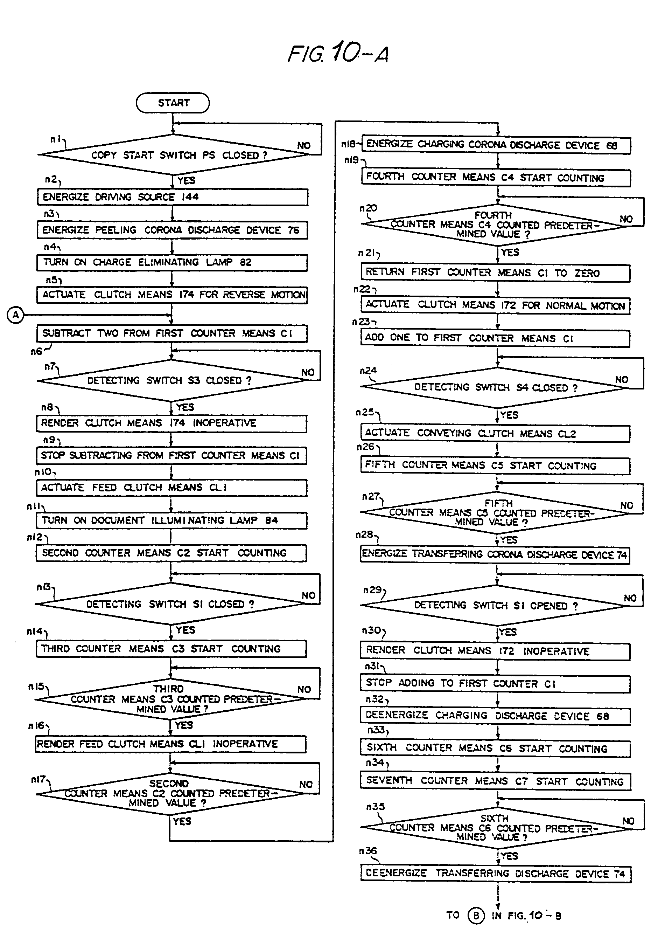

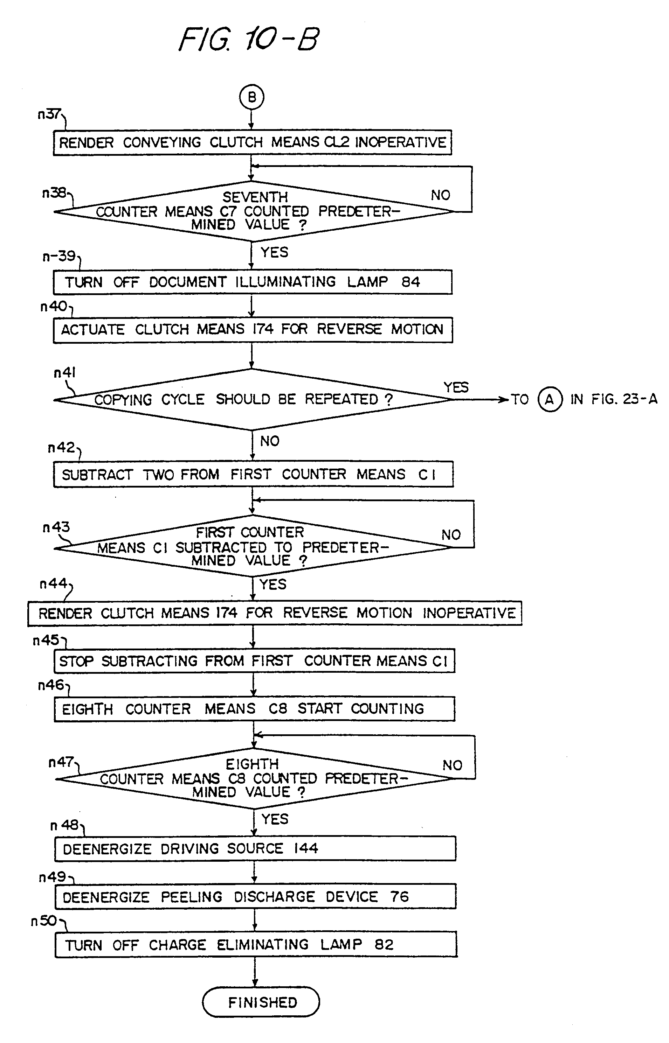

With reference to Figures 10-A and 10-B, the modes of controlling the various means of the copying apparatus will be described. In step n1, the copying start switch PS is closed to start a copying cycle. This results in energization of the driving source 144 in step n2, energization of the peeling corona discharge device 76 in step n3, lighting of the charge eliminating lamp 82 in step n4, and actuation of the clutch means 174 for reverse motion in the power transmission mechanism 166 in step n5. As a result, the document placing means 48 starts its preparatory movement from its stop position shown by the solid line in Figure 1 to the left in Figure 1 at a speed 2V. Every time the detector 518 generates a pulse signal, a first counter means C1 built in the control means 250 subtracts 2 from the cumulative count in step n6 (as will be made clear from the following description, when the document placing means 48 starts to make a preparatory movement from its stop position, the first counter means C1 has a predetermined count). Then, in step n7, it is judged whether or not the detecting switch S3 is closed, and therefore whether the document placing means 48 has made a preparatory movement to the start-of-scan position shown by the two-dot chain line 48A in Figure 1. When the detecting switch S3 is closed, step n8 sets in, and the clutch means 174 for reverse motion in the power transmission mechanism 166 for the document placing means 48 is rendered inoperative. Thus, the document placing means 48 is stopped at the start-of-scan position shown by the two-dot chain line 48A in Figure 1. In step n9, the first counter means C1 stops subtraction from the cumulative count (at this time, the count of the first counter means C1 becomes zero unless errors have been accumulated). In step n10, a feed clutch means CL1 for connecting the feed roller 94 of the paper feed device 90 to the driving source 144 is actuated, and the feeding of a copying paper sheet from the paper cassette 100 is started. In step n11, the document illuminating lamp 84 is turned on. In step n12, a second counter means C2 built in the control means 250 starts to count the pulse signals generated by the detector 518. In step n13, it is judged whether or not the detecting switch S1 has been closed and therefore the leading edge of the sheet material fed from the copying paper cassette 100 has reached the detecting arm of the detecting switch S1. When the detecting switch S1 has been closed, step n14 sets in, and a third counter means C3 in the control means 250 starts to count the pulse signals generated by the detector 518. Then, in step n15, it is judged whether or not the third counter means C3 has counted a predetermined value. This predetermined value corresponds to the time which is required for the leading edge of the sheet material to reach the nip position of the conveyor rollers 120 and 122 after its arrival at the detecting arm of the detecting switch S1. When the third counter means C3 has counted the predetermined value, step n16 sets in, and the feed clutch means CL1 is rendered inoperative. Then, in step n17, it is judged whether or not the second counter means C2 which started counting in step n12 has counted a predetermined value. This predetermined value corresponds to the time required for the document illuminating lamp 84 turned on in step n11 to assume a stable state. When the second counter means C2 has counted the predetermined value, step n18 sets in, and the charging corona discharge device 68 is energized. In step n19, a fourth counter means C4 built in the control means 250 starts to count the pulse signals generated by the detector 518. Then, in step n20, it is judged whether or not the fourth counter means C4 has counted a predetermined value. This predetermined value corresponds to the sum of the time required for the charging corona discharge device 68 energized in step n18 to assume a stable state and the time required for a specified position of the photosensitive member on the rotating drum 64 to move by the rotation of the rotating drum 64 from a position at which it undergoes the action of the corona discharge device 68 to a position at which it is exposed through the optical unit 70. When the fourth counter means C4 has counted a predetermined value, step n21 sets in, and the count of the first counter means C1 is returned to zero if it is not zero owing to the accumulation of errors. In step n22, the clutch means 172 for normal motion in the power transmission mechanism 166 for the document placing means 48 is actuated, and the document placing means 48 starts to make a scanning exposure movement at a speed V to the right in Figure 1 from its start-of-scan position shown by the two-dot chain line 48A in Figure 1. In step n23, the first counter means C1 begins to add one to the cumulative count every time the detector 518 produces a pulse signal. Then, in step n24, it is judged whether or not the detecting switch S4 has been closed, and the document placing means 48 has been moved a predetermined distance to the right in Figure 1 from the start-of-scan position shown by the two-dot chain line 48A in Figure 1. When the detecting switch S4 has been closed, step n25 sets in, and a conveying clutch means CL2 for connecting the conveyor roller 122 to the driving source 114 is actuated, and consequently, conveying of the sheet material whose leading edge is at a stop while being in abutment against the nip position of the conveyor rollers 120 and 122 is started. In step n26, a fifth counter means C5 built in the control means 250 begins to count the pulse signals generated by the detector 518. Then, in step n27, it is judged whether or not the fifth counter means C5 has counted a predetermined value. This predetermined value corresponds to the time required for the leading edge of the sheet material whose conveying was started in step n26 to reach a position at which it undergoes the action of the transferring corona discharge device 74. When the fifth counter means C5 has counted the predetermined value, step n28 sets in, and the transferring corona discharge device 74 is energized. Then, in step n29, it is judged whether or not the detecting switch S1 has been opened and therefore whether the trailing edge of the sheet material has gone past the detecting arm of the detecting switch S1. When the detecting switch S1 has been opened, step n30 sets in, and the clutch means 172 of the power transmission mechanism 166 is rendered inoperative, and the scanning exposure movement of the document placing means 48 is terminated corresponding to the length of the sheet material. In step n31, the first counter means C1 stops making additions to the count. In step n32, the charging corona discharge device 68 is deenergized. In step n33, a sixth counter means C6 built in the control means 250 starts to count the pulse signals generated by the detector 518, and in step n34, a seventh counter means C7 built in the control means 250 begins to count the pulse signals generated by the detector 518. Then, in step n35, it is judged whether or not the sixth counter means C6 has counted a predetermined value. This predetermined value corresponds to the time required for the trailing edge of the sheet material to go past the position at which it undergoes the action of the corona discharge device 74, after going past the detecting arm of the detecting switch S1. When the sixth counter means C6 has counted the predetermined value, step n36 sets in, and the corona discharge device 74 is deenergized. In step n37, the conveying clutch means CL2 is rendered inoperative. Then, step n38 sets in, and it is judged whether or not the seventh counter means C7 has counted a predetermined value. This predetermined value corresponds to the time interval which is desired so as to prevent vibration, etc. during the time period which runs from the time of rendering the clutch means 172 inoperative to the time of rendering the clutch means 174 operative. When the seventh counter means C7 has counted the predetermined value, step n39 sets in, and the document illuminating lamp 84 is turned off. In step n40, the clutch means 174 for reverse motion in the power transmission means 166 is actuated, and consequently, the document placing means 48 begins to make a returning movement at a speed 2V to the left in Figure 1. Then, in step n41, it is judged whether or not the copying cycle should be performed repeatedly. When the copying step is to be repeated, one goes back to step n6. When the copying cycle should not be repeated, step n 42 sets in, and the first counter means C1 begins to subtract 2 from the cumulative count every time the detector 518 produces a pulse signal. Then in step n43, it is judged whether or not the count of the first counter means C1 has been subtracted to a predetermined value. This predetermined value corresponds to the distance of movement between the stop position of the document placing means 48 shown by the solid line in Figure 1 and its start-of-scan position shown by the two-dot chain line 48A in Figure 1. When the count of the first counter means C1 has been subtracted to the predetermined value, step n44 sets in, and the clutch means 174 for reverse motion in the power transmission mechanism 166 is rendered inoperative. Thus, the document placing means 48 can be stopped at the stop position with a sufficient accuracy without the need for a detecting switch for detecting the occupation of the stop position by the document placing means 48. In step n45, the first counter means C1 stops subtraction. In step n46, an eighth counter means C8 built in the control means 250 starts to count the pulse signals generated by the detector 518. Then, in step n47, it is judged whether or not the eighth counter means C8 has counted a predetermined value. This predetermined value may correspond to the time required for the rotating drum 64 to rotate further through about one turn after the transferring operation. When the eighth counter means C8 has counted the predetermined value, step n48 sets in, and the driving source 144 is deenergized. In step n49, the peeling corona discharge device 76 is deenergized, and in step n50, the charge eliminating lamp 82 is turned off.

The aforesaid controlling mode is applicable when the sheet material is automatically fed from the copying paper feed device 90. When the sheet material is to be inserted manually to the manual feed device 92, the controlling mode differs in the following respects. Firstly, in step n1, instead of judging whether or not the copying start switch PS is closed, it is judged whether or not the detecting switch S2 has been closed and therefore the leading edge of the sheet material inserted manually has arrived at the detecting arm of the detecting switch S2. Secondly, steps n10, n14, n15 and n16 are omitted. Otherwise, the controlling mode is substantially the same as that described hereinabove. The feed rollers 110 and 112 of the manual feed device 92 are kept rotating even after the leading edge of the sheet material fed by it is stopped while being in abutment against the nip position of the conveyor rollers 120 and 122. Since, however, the feed roller 110 is pressed relatively lightly against the feed roller 112 by its own weight, the feed rollers 110 and 112 slip with respect to the sheet material when it is stopped with its leading edge in abutment against the aforesaid nip position. Thus, the feed rollers 110 and 112 do not adversely affect the sheet material.

The electrostatic copying apparatus improved in accordance with this invention has been described in detail hereinabove with reference to its preferred embodiments shown in the accompanying drawings. It should be understood however that the invention is not limited to these specific embodiments, and various changes and modifications are possible without departing from the scope of the invention.

## Claims

1. An electrostatic copying apparatus comprising a document placing means (48) being disposed on the top surface of a housing so that the document placing means can carry out reciprocating movement, said document placing means (48) having a transparent plate (52) for placing a document thereon, a driving source (144) a power transmission mechanism (146) including a clutch means (172) for normal motion and a clutch means (174) for reverse motion for drivingly coupling the driving source to the document placing means, and a control means (250) for actuating the clutch means for normal motion to move the document placing means for scanning exposure in a predetermined direction from a predetermined start-of-scan position in a copying cycle, and for rendering the clutch means for normal motion inoperative and for rendering simultaneously with it or after it, the clutch means for reverse motion to move the document placing means in the reverse direction,

   **characterized by**

   a driving amount detecting means (518) for detecting the amount of rotation of a rotating element (510) adapted to be rotated when the driving source is energized, said control means (250) being such as to render the clutch means (174) for reverse motion inoperative, and to thereby stop the document placing means (48) at a predetermined stop position, when the amount of rotation of the rotating element (510) after the starting of the returning movement of the document placing means (48) is in a predetermined relation to the amount of rotation of the rotating element (510) during the preceding scanning exposure movement of the document placing means (48).

2. The apparatus according to claim 1 wherein the control means (250) at the time of the copying cycle first actuates the clutch means (174) for reverse motion to cause the document placing means (48) to make a preparatory movement from said stop position in the reverse direction, and when the document placing means (48) has made a preparatory movement to the start-of-scan position, the control means (250) renders the clutch means (174) for reverse motion inoperative.

3. The apparatus according to claim 1 or 2 wherein the control means (250) renders the clutch means (172) for normal motion inoperative when the document placing means (48) has made a scanning exposure movement over a distance corresponding to the length of a copying paper in said predetermined direction from said start-of-scan position.

4. The apparatus according to one of the claims 1 to 3 wherein the rotating element is a detection plate (510) having a plurality of circumferentially spaced cuts (512) formed in its peripheral edge portion; the driving amount detecting means includes a detector (518) having a light emitting element (514) located on one side of the peripheral edge portion of the detection plate (510) and a light receiving element (516) located on the other side and produces a pulse signal every time the light receiving element (516) receives the light from the light emitting element (514) by the positioning of the cut (512) between the light emitting element (514) and the light receiving element (516) or every time the light from the light emitting element (514) is shut off by the detection plate (510); and said control means (250) renders the clutch means (174) for reverse motion inoperative when the number of pulse signals produced by the driving amount detecting means (518) during the scanning exposure movement of the document placing means (48) is in a predetermined relation to the number of pulses produced by the driving amount detecting means (518) after the document placing means (48) has started to make a returning movement.

5. The apparatus according to one of the claims 1 to 4 wherein said control means (250) includes counter means for performing addition every time the driving amount detecting means (518) produces a pulse signal during the scanning exposure movement of the document placing means (48) and performing subtraction every time the driving amount detecting means (518) produces a pulse signal during the returning movement of the document placing means (48), and when the count of the counter is subtracted to a predetermined value, said control means (250) renders the clutch means (174) for reverse motion inoperative.

## Revendications

1. Un appareil à copier électrostatique comprenant un moyen de pose de document (48) qui est disposé sur la surface supérieure d'un carter de telle manière que le moyen de pose de document puisse effectuer un mouvement alternatif, ledit moyen de pose de document (48) ayant une plaque transparente (52) pour placer un document dessus, une source motrice (144), un mécanisme de transmission de puissance (146) incluant un moyen d'embrayage (172) pour un mouvement normal et un moyen d'embrayage (174) pour un mouvement inverse pour accoupler activement la source motrice au moyen de pose de document, et un moyen de commande (250) pour actionner le moyen d'embrayage pour un mouvement normal de manière à déplacer le moyen de pose de document pour une exposition de balayage dans une direction prédéterminée depuis une position prédéterminée de démarrage de balayage dans un cycle de copiage, et pour rendre inactif le moyen d'embrayage pour un déplacement normal et pour rendre actif, simultanément à cela ou après cela, le moyen d'embrayage pour un déplacement inverse pour déplacer le moyen de pose de document dans la direction inverse,

caractérisé par un moyen de détection de la quantité d'entraînement (518) pour détecter la quantité de rotation d'un élément rotatif (510) agencé pour être entraîné en rotation lorsque la source motrice est alimentée, ledit moyen de commande (250) étant tel qu'il rend inactif le moyen d'embrayage (174) pour un mouvement inverse et arrête de ce fait le moyen de pose de document (48) à une position d'arrêt prédéterminée, lorsque la quantité de rotation de l'élément rotatif (510), après le démarrage du mouvement de retour du moyen de pose de document (48), est dans une relation prédéterminée par rapport à la quantité de rotation de l'élément rotatif (510) pendant le mouvement précédent d'exposition de balayage du moyen de pose de document (48).

2. L'appareil selon la revendication 1, dans lequel le moyen de commande (250), au moment du cycle de copiage, actionne d'abord le moyen d'embrayage (174) pour un mouvement inverse pour faire faire au moyen de pose de document (48) un mouvement préparatoire depuis ladite position d'arrêt dans la direction inverse et, quand le moyen de pose de document (48) a fait un mouvement préparatoire jusqu'à la position de démarrage de balayage, le moyen de commande (250) rend inactif le moyen d'embrayage (174) pour un mouvement inverse.

3. L'appareil selon la revendication 1 ou 2, dans lequel le moyen de commande (250) rend inactif le moyen d'embrayage (172) pour un mouvement normal lorsque le moyen de pose de document (48) a fait un mouvement d'exposition de balayage, sur une distance correspondant à la longueur d'un papier à copier, dans ladite direction prédéterminée depuis ladite position de démarrage de balayage.

4. L'appareil selon l'une des revendications 1 à 3, dans lequel l'élément rotatif est une plaque de détection (510) ayant une pluralité d'encoches (512) espacées circonférentiellement formées dans sa portion de bord périphérique; le moyen de détection de la quantité d'entraînement comprend un détecteur (518) ayant un élément émetteur de lumière (514) disposé d'un côté de la portion de bord périphérique de la plaque de détection (510) et un élément récepteur de lumière (516) disposé de l'autre côté, et produit un signal impulsionnel chaque fois que l'élément récepteur de lumière (516) reçoit la lumière provenant de l'élément émetteur de lumière (514) par le positionnement de l'encoche (512) entre l'élément émetteur de lumière (514) et l'élément récepteur de lumière (516), ou chaque fois que la lumière provenant de l'élément émetteur de lumière (514) est arrêtée par la plaque de détection (510) ; et ledit moyen de commande (250) rend inactif le moyen d'embrayage (174) pour un mouvement inverse lorsque le nombre de signaux impulsionnels produits par le moyen de détection de la quantité d'entraînement (518) pendant le mouvement d'exposition de balayage du moyen de pose de document (48) est dans une relation prédéterminée avec le nombre d'impulsions produites par le moyen de détection de la quantité d'entraînement (518) après que le moyen de pose de document (48) a commencé à faire un mouvement de retour.

5. L'appareil selon l'une des revendications 1 à 4, dans lequel ledit moyen de commande (250) comprend un compteur pour effectuer une addition chaque fois que le moyen de détection de la quantité d'entraînement (518) produit un signal impulsionnel pendant le mouvement d'exposition de balayage du moyen de pose de document (48) et effectuer une soustraction chaque fois que le moyen de détection de la quantité d'entraînement (518) produit un signal impulsionnel pendant le mouvement de retour du moyen de pose de document (48) et, lorsque le décompte du compteur est soustrait à une valeur prédéterminée, ledit moyen de commande (250) rend inactif le moyen d'embrayage (174) pour un mouvement inverse.

**Patentansprüche**

1. Elektrostatisches Kopiergerät, das eine Dokumentenauflage (48) aufweist, die auf der Oberseite eines Gehäuses derart angeordnet ist, daß sie eine Hin- und Herbewegung ausführen kann, wobei die Dokumentenauflage (48) aufweist: eine lichtdurchlässige Platte (52) zum Auflegen eines Dokuments darauf, eine Antriebsquelle (144), einen Kraftübertragungsmechanismus (146) mit einer Kupplung (172) für Normalbwegung und einer Kupplung (174) für Rückwärtsbewegung zur Antriebsverbindung der Antriebsquelle mit der Dokumentenauflage, und eine Steuereinrichtung (250), die die Kupplung für Normalbewegung betätigt, so daß die Dokumentenaufnahme zur Abtastbelichtung in eine vorbestimmte Richtung aus einer vorbestimmten AbtastStart-Position in einem Kopierzyklus bewegt wird, und die die Kupplung für Normalbewegung unwirksam macht und gleichzeitig damit oder danach die Kupplung für Rückwärtbewegung wirksam macht, so daß die Dokumentenauflage in die Rückwärtsrichtung bewegt wird,

**gekennzeichnet durch**

eine Antriebsbetragdetektiereinrichtung (518), die den Betrag der Drehung eines Drehelements (510) detektiert, das bei Aktivierung der Antriebsquelle gedreht wird, wobei die Steuereinrichtung (250) derart ausgebildet ist, daß sie die Kupplung (174) für Rückwärtsbewegung unwirksam macht und dadurch die Dokumentenauflage (48) in einer vorbestimmten Halteposition anhält, wenn der Betrag der Drehung des Drehelements (510) nach dem Start der Rückbewegung der Dokumentenauflage (48) in einer vorbestimmten Beziehung zu dem Betrag der Drehung des Drehelements (510) während der vorausgehenden Abtastbelichtungsbewegung der Dokumentenauflage (48) steht.

2. Gerät nach Anspruch 1, wobei die Steuereinrichtung (250) zum Zeitpunkt des Kopierzyklus zuerst die Kupplung (174) für Rückwärtsbewegung betätigt, so daß die Dokumentenauflage (48) eine vorbereitende Bewegung aus der Halteposition in die Rückwärtsrichtung ausführt, und die Steuereinrichtung (250) nach Ausführen der vorbereitenden Bewegung der Dokumentenauflage (48) in die Abtast-Start-Position die Kupplung (174) für Rückwärtsbewegung unwirksam macht.

3. Gerät nach Anspruch 1 oder 2, wobei die Steuereinrichtung (250) die Kupplung (172) für Normalbewegung unwirksam macht, wenn die Dokumentenauflage (48) eine Abtastbelichtungsbewegung über eine Strecke ausgeführt hat, die der Länge eines Kopierpapiers in der vorbestimmten Richtung aus der Abtast-Start-Position entspricht.

4. Gerät nach einem der Ansprüche 1-3, wobei das Drehelement eine Detektorplatte (510) ist, die eine Vielzahl von in ihrem Außenrandbereich ausgebildeten, umfangsmäßig beabstandeten Einschnitten (512) aufweist; die Antriebsbetragdetektiereinrichtung einen Detektor (518) aufweist, der auf einer Seite des Außenrandbereichs der Detektorplatte (510) mit einem Licht aussendenden Element (514) und auf der anderen Seite mit einem Lichtempfangselement (516) versehen ist und jedesmal, wenn das Lichtempfangselement (516) Licht von dem Licht aussendenden Element (514) durch die Positionierung des Einschnitts (512) zwischen dem Licht aussendenden Element (514) und dem Lichtempfangselement (516) empfängt, oder jedesmal, wenn das Licht von dem Licht aussendendes Element (514) durch die Detektorplatte (510) blockiert ist, ein Impulssignal erzeugt; und die Steuereinrichtung (250) die Kupplung (174) für Rückwärtsbewegung unwirksam macht, wenn die Anzahl von von der Antriebsbetragdetektiereinrichtung (518) während der Abtastbelichtungsbewegung der Dokumentenauflage (48) erzeugten Impulsen in einer vorbestimmten Beziehung zu der Anzahl von Impulsen steht, die von der Antriebsbetragdetektiereinrichtung (518) nach Beginn einer Rückbewegung der Dokumentenauflage (48) erzeugt werden.

5. Gerät nach einem der Ansprüche 1-4, wobei die Steuereinrichtung (250) einen Zähler aufweist, der jedesmal, wenn die Antriebsbetragdetektiereinrichtung (518) während der Abtastbelichtungsbewegung der Dokumentenauflage (48) ein Impulssignal erzeugt, eine Addition ausführt und jedesmal, wenn die Antriebsbetragdetektiereinrichtung (518) während der Rückbewegung der Dokumentenauflage (48) ein Impulssignal erzeugt, eine Subtraktion ausführt, und die Steuereinrichtung (250) die Kupplung (174) für Rückwärtsbewegung unwirksam macht, wenn der Zählstand des Zählers auf einen vorbestimmten Wert subtrahiert ist.

FIG. I

FIG. 2

FIG. 3

FIG. 4

FIG. 5

FIG. 6

## FIG. 7

518
514
516
206
510
508
512

## FIG. 8

518
510
508
512

## FIG. 9

PS

S1

S2

S3

518

C1
C2
C3
C4
C5
C6
C7
C8

68
74
76
82
84
114
172
174
CL1
CL2

250

EP 0 262 692 B1

## FIG. 10-A

START

n1 — COPY START SWITCH PS CLOSED ? → NO
↓ YES

n2 — ENERGIZE DRIVING SOURCE 144

n3 — ENERGIZE PEELING CORONA DISCHARGE DEVICE 76

n4 — TURN ON CHARGE ELIMINATING LAMP 82

n5 — ACTUATE CLUTCH MEANS 174 FOR REVERSE MOTION

(A)

SUBTRACT TWO FROM FIRST COUNTER MEANS C1
n6

n7 — DETECTING SWITCH S3 CLOSED ? → NO
↓ YES

n8 — RENDER CLUTCH MEANS 174 INOPERATIVE

n9 — STOP SUBTRACTING FROM FIRST COUNTER MEANS C1

n10 — ACTUATE FEED CLUTCH MEANS CL1

n11 — TURN ON DOCUMENT ILLUMINATING LAMP 84

n12 — SECOND COUNTER MEANS C2 START COUNTING

n13 — DETECTING SWITCH S1 CLOSED ? → NO
↓ YES

n14 — THIRD COUNTER MEANS C3 START COUNTING

n15 — THIRD COUNTER MEANS C3 COUNTED PREDETERMINED VALUE ? → NO
↓ YES

n16 — RENDER FEED CLUTCH MEANS CL1 INOPERATIVE

n17 — SECOND COUNTER MEANS C2 COUNTED PREDETERMINED VALUE ? → NO
↓ YES

n18 — ENERGIZE CHARGING CORONA DISCHARGE DEVICE 68

n19 — FOURTH COUNTER MEANS C4 START COUNTING

n20 — FOURTH COUNTER MEANS C4 COUNTED PREDETERMINED VALUE ? → NO
↓ YES

n21 — RETURN FIRST COUNTER MEANS C1 TO ZERO

n22 — ACTUATE CLUTCH MEANS 172 FOR NORMAL MOTION

n23 — ADD ONE TO FIRST COUNTER MEANS C1

n24 — DETECTING SWITCH S4 CLOSED ? → NO
↓ YES

n25 — ACTUATE CONVEYING CLUTCH MEANS CL2

n26 — FIFTH COUNTER MEANS C5 START COUNTING

n27 — FIFTH COUNTER MEANS C5 COUNTED PREDETERMINED VALUE ? → NO
↓ YES

n28 — ENERGIZE TRANSFERRING CORONA DISCHARGE DEVICE 74

n29 — DETECTING SWITCH S1 OPENED ? → NO
↓ YES

n30 — RENDER CLUTCH MEANS 172 INOPERATIVE

n31 — STOP ADDING TO FIRST COUNTER C1

n32 — DEENERGIZE CHARGING DISCHARGE DEVICE 68

n33 — SIXTH COUNTER MEANS C6 START COUNTING

n34 — SEVENTH COUNTER MEANS C7 START COUNTING

n35 — SIXTH COUNTER MEANS C6 COUNTED PREDETERMINED VALUE ? → NO
↓ YES

n36 — DEENERGIZE TRANSFERRING DISCHARGE DEVICE 74

TO (B) IN FIG. 10-B

18

## FIG. 10-B

(B)

n37 — RENDER CONVEYING CLUTCH MEANS CL2 INOPERATIVE

n38 — SEVENTH COUNTER MEANS C7 COUNTED PREDETER-MINED VALUE ? — NO

YES

n-39 — TURN OFF DOCUMENT ILLUMINATING LAMP 84

n40 — ACTUATE CLUTCH MEANS 174 FOR REVERSE MOTION

n41 — COPYING CYCLE SHOULD BE REPEATED ? — YES → TO (A) IN FIG. 23-A

NO

n42 — SUBTRACT TWO FROM FIRST COUNTER MEANS C1

n43 — FIRST COUNTER MEANS C1 SUBTRACTED TO PREDETER-MINED VALUE ? — NO

YES

n44 — RENDER CLUTCH MEANS 174 FOR REVERSE MOTION INOPERATIVE

n45 — STOP SUBTRACTING FROM FIRST COUNTER MEANS C1

n46 — EIGHTH COUNTER MEANS C8 START COUNTING

n47 — EIGHTH COUNTER MEANS C8 COUNTED PREDETER-MINED VALUE ? — NO

YES

n48 — DEENERGIZE DRIVING SOURCE 144

n49 — DEENERGIZE PEELING DISCHARGE DEVICE 76

n50 — TURN OFF CHARGE ELIMINATING LAMP 82

FINISHED